(19) Europäisches Patentamt
European Patent Office
Office européen des brevets

(11) **EP 4 607 992 A1**

(12) **EUROPEAN PATENT APPLICATION**
published in accordance with Art. 153(4) EPC

(43) Date of publication:
**27.08.2025 Bulletin 2025/35**

(21) Application number: **22966217.6**

(22) Date of filing: **25.11.2022**

(51) International Patent Classification (IPC):
**H04W 24/02** (2009.01)          **H04L 5/00** (2006.01)
**H04L 27/00** (2006.01)

(52) Cooperative Patent Classification (CPC):
**H04L 5/00; H04L 27/00; H04W 24/02**

(86) International application number:
**PCT/CN2022/134236**

(87) International publication number:
**WO 2024/108526 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **HU, Rongyi
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **WIRELESS COMMUNICATION METHOD, TERMINAL DEVICE AND NETWORK DEVICE**

(57)    A wireless communication method, a terminal device and a network device. The method comprises: a terminal device receiving measurement configuration information, wherein the measurement configuration information is used for configuring a measurement gap, gap sharing information and at least one measurement object, the gap sharing information being used for indicating the proportion of the measurement gap occupied by groups of measurement objects, the measurement objects being divided into M groups, M being an integer greater than or equal to 2, and each group comprising one or more measurement objects; and the terminal device executing measurement on the at least one measurement object within the measurement gap according to the gap sharing information.

FIG. 2

# Description

## TECHNICAL FIELD

Embodiments of the present disclosure relate to the field of communications, and in particular, relate to a method for wireless communication, and a terminal device and a network device thereof.

## RELATED ART

In some standalone (SA) network deployment scenarios, a mechanism for sharing measurement gaps (MGs) is introduced to coordinate MG resources between measurement objects (MOs) for intra-frequency and inter-frequency measurements. However, in practice, the deployment scenarios are complex and diverse. For example, different network operators may adopt different network deployment strategies, possess different frequency and spectrum plans, or use different bearer networks for carrying special services such as voice. In this case, how to share MG resources is an urgent problem to be solved.

## SUMMARY

The present disclosure provides a method for wireless communication, and a terminal device and a network device thereof, which are beneficial to satisfying measurement priority requirements in different scenarios.

In a first aspect, a method for wireless communication is provided. The method is applicable to a terminal device, and includes: receiving measurement configuration information, wherein the measurement configuration information is used to configure an MG, gap sharing information, and at least one MO, wherein the gap sharing information is used to indicate a proportion of the MG occupied by an MO group, the MO group including M groups, wherein M is an integer greater than or equal to 2, and each of the M groups includes one or more MOs; and performing a measurement on the at least one MO within the MG based on the gap sharing information.

In a second aspect, a method for wireless communication is provided. The method is applicable to a network device, and includes: transmitting measurement configuration information to a terminal device, wherein the measurement configuration information is used to configure an MG, gap sharing information, and at least one MO, wherein the gap sharing information is used to indicate a proportion of the MG occupied by an MO group, the MO group including M groups, wherein M is an integer greater than or equal to 2, and each of the M groups includes one or more MOs.

In a third aspect, a terminal device is provided. The terminal device is configured to perform the method for wireless communication according to the first aspect or embodiments thereof.

Specifically, the terminal device includes functional modules configured to perform the method for wireless communication according to the first aspect or embodiments thereof.

In a fourth aspect, a network device is provided. The network device is configured to perform the method for wireless communication according to the second aspect or embodiments thereof.

Specifically, the network device includes functional modules configured to perform the method for wireless communication according to the second aspect or embodiments thereof.

In a fifth aspect, a terminal device is provided. The terminal device includes a processor and a memory. The memory is configured to store one or more computer programs. The processor is configured to load and run the one or more computer programs stored in the memory, to cause the terminal device to perform the method for wireless communication according to the first aspect or embodiments thereof.

In a sixth aspect, a network device is provided. The network device includes a processor and a memory. The memory is configured to store one or more computer programs. The processor is configured to load and run the one or more computer programs stored in the memory, to cause the network device to perform the method for wireless communication according to the second aspect or embodiments thereof.

In a seventh aspect, a chip is provided. The chip is configured to perform the method for wireless communication according to any one of the first and the second aspects or embodiments thereof.

Specifically, the chip includes a processor configured to load and run one or more computer programs in a memory, to cause a device equipped with the chip to perform the method for wireless communication according to any one of the first and the second aspects or embodiments thereof.

In an eighth aspect, a computer-readable storage medium is provided. The computer-readable storage medium is configured to store one or more computer programs. The one or more computer programs enable a computer to perform the method for wireless communication according to any one of the first and the second aspects or embodiments thereof.

In a ninth aspect, a computer program product is provided. The computer program product includes one or more computer program instructions. The one or more computer program instructions cause a computer to perform the method for wireless communication according to any one of the first and the second aspects or embodiments thereof.

In a tenth aspect, a computer program is provided. The computer program, when loaded and run by a computer, causes the computer to perform the method for wireless communication according to any one of the first and the second aspects or embodiments thereof.

In the above technical solutions, MOs are grouped, and a proportion of an MG shared by a group is configured based on gap sharing information. This provides higher flexibility for a network operator, thereby preferentially achieving a measurement under any desired radio access technology (RAT) and meeting flexible mobile service requirements. Moreover, the gap sharing information may indicate a plurality of different sharing proportions of the MG occupied by the group of the MO. In this way, measurement priorities for various needs may be configured based on the sharing proportions to perform a mobility measurement on each MO, such that diverse measurement priority requirements of various networks or operators are effectively met.

## BRIEF DESCRIPTION OF DRAWINGS

FIG. 1 is a schematic diagram of an architecture of a communication system according to some embodiments of the present disclosure;

FIG. 2 is a schematic diagram of interaction of a method for wireless communication according to some embodiments of the present disclosure;

FIG. 3 is a schematic block diagram of a terminal device according to some embodiments of the present disclosure;

FIG. 4 is a schematic block diagram of a network device according to some embodiments of the present disclosure;

FIG. 5 is a schematic block diagram of a communication device according to some embodiments of the present disclosure;

FIG. 6 is a schematic block diagram of a chip according to some embodiments of the present disclosure; and

FIG. 7 is a schematic block diagram of a communication system according to some embodiments of the present disclosure.

## DETAILED DESCRIPTION

The technical solutions according to the embodiments of the present disclosure are described hereinafter in combination with the accompanying drawings in the embodiments of the present disclosure. It is obvious that the described embodiments are merely part but not all of the embodiments of the present disclosure. All other embodiments derived by those skilled in the art without creative efforts based on the embodiments in the present disclosure are within the protection scope of the disclosure.

The technical solutions according to the embodiments of the present disclosure are applicable to various communication systems, for example, a global system of mobile communication (GSM) system, a code division multiple access (CDMA) system, a wideband code division multiple access (WCDMA) system, a general packet radio service (GPRS) system, a long-term evolution (LTE) system, an advanced long-term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (Wi-Fi), a 5th generation (5G) system, other communication systems, or the like.

In general, traditional communication systems support a limited number of connections and are easy to implement. However, with the development of communication technologies, the mobile communication system supports traditional communications and other communications, for example, device-to-device (D2D) communications, machine-to-machine (M2M) communications, machine type communications (MTC), vehicle-to-vehicle (V2V) communications, vehicle-to-everything (V2X) communications, and the like. The embodiments of the present disclosure are applicable to the communication systems.

In some embodiments, the communication system in the embodiments of the present disclosure is applicable to a carrier aggregation (CA) scenario, a dual connectivity (DC) scenario, and a standalone (SA) networking scenario.

In some embodiments, the communication system in the embodiments of the present disclosure is applicable to an unlicensed spectrum, and the unlicensed spectrum is also construed as a shared spectrum. Alternatively, the communication system in the embodiments of the present disclosure is applicable to a licensed spectrum, and the licensed spectrum is also construed as a non-shared spectrum.

The embodiments of the present disclosure are described in conjunction with the network device and the terminal device. The terminal device is also referred to as a user equipment (UE), an access terminal, a subscriber unit, a subscriber station, a mobile station, a mobile, a remote station, a remote terminal, a mobile device, a user terminal, a terminal, a wireless communication device, a user proxy, a user device, or the like.

The terminal device is a station (STA) in WLAN, a cellular phone, a cordless phone, a Session Initiation Protocol (SIP) phone, a wireless local loop (WLL) ST, a personal digital assistant (PDA) device, a hand-held device with a wireless communication capability, a computing device or other processing devices connected to a wireless modem, an in-vehicle device, a wearable device, a next generation communication system, such as a terminal device in NR, a terminal device in an evolved public land mobile network (PLMN), or the like.

In the embodiments of the present disclosure, the terminal device is deployed on the land, for example, indoors or outdoors, handheld, wearable, or in vehicles; or deployed on water (for example, on a ship); or the terminal device is deployed in air (for example, on an airplane, a balloon, or a satellite).

In the embodiments of the present disclosure, the terminal device is a mobile phone, a pad, a computer with a radio transceiver function, a virtual reality (VR) device, an augmented reality (AR) device, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, or the like.

By way of example but not limitation, in the embodiments of the present disclosure, the terminal device may also be a wearable device. The wearable device is also referred to as a wearable smart device, and is a generic name of wearable devices such as glasses, gloves, watches, clothing, and shoes, which are intelligently designed and developed for daily wear by using wearable technologies. The wearable device is a portable device that is directly worn on the body or integrated into clothing or accessories of the user. The wearable device is not only a hardware device, but also implements powerful functions by software support, data interaction, and cloud interaction. The wearable smart device in a broad sense includes devices such as smart watches or smart glasses that have full functionality and large size, and are capable of implementing all or part of functionality without depending on the smart phone, and devices such as various kinds of smart bracelets and smart jewelries for monitoring physical signs, which are dedicated to a specific type of application functions and need to be used in cooperation with other devices such as the smart phone.

In the embodiments of the present disclosure, the network device is a device for communicating with the mobile device, the network device is an access point (AP) in WLAN, a base transceiver station (BTS) in GSM or CDMA, a NodeB (NB) in WCDMA, an evolved NodeB (eNB or eNodeB) in LTE, a relay station or an AP, an in-vehicle device, a wearable device, a network device in an NR network (gNB) or in an evolved PLMN or an NTN.

By way of example but not limitation, in the embodiments of the present disclosure, the terminal device is mobile. For example, the network device is a mobile device. In some embodiments, the network device is a satellite or a balloon station. For example, the satellite is a low Earth orbit (LEO) satellite, a medium Earth orbit (MEO) satellite, a geostationary Earth orbit (GEO) satellite, a high elliptical orbit (HEO) satellite, or the like. In some embodiments, the network device is also an NB located on land, water, or the like.

In the embodiments of the present disclosure, the network device provides services for cells, and the terminal device communicates with the network device over the transmission resources (such as frequency domain resources, or spectrum resources) used in the cells. The cell is a cell corresponding to the network device (such as the NB), and the cell belongs to a macro NB or a NB corresponding to a small cell. The small cell includes a metro cell, a micro cell, a pico cell, a femto cell, or the like. The small cells have the small coverage and low transmission power, and are suitable for providing high rate data transmission services.

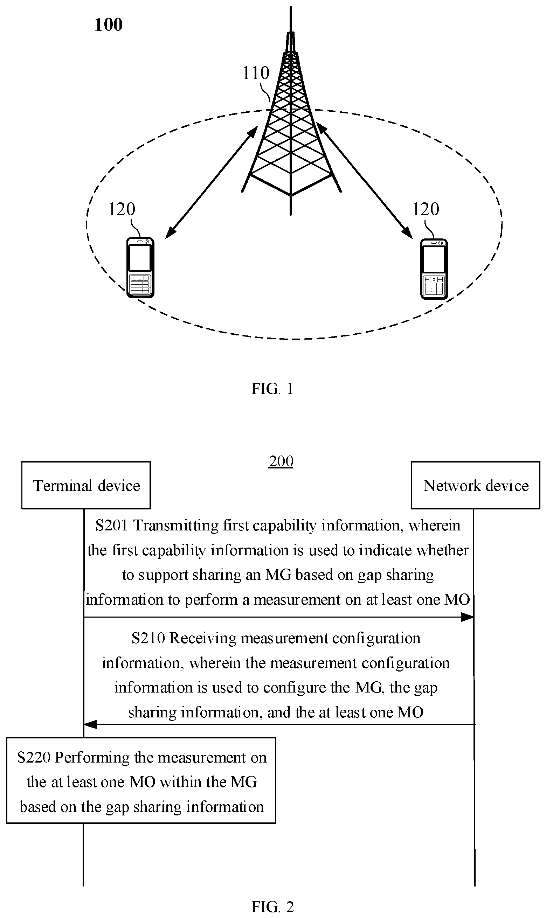

Illustratively, the communication system 100 in the embodiments of the present disclosure is shown in FIG. 1. The communication system 100 includes a network device 110, and the network device is a device communicated with a terminal device 120 (also referred to as a communication terminal or a terminal). The network device 110 provides communication coverage to a specific geographical area, and communicates with the terminal device in the coverage area.

FIG. 1 illustrates one network device and two terminal devices. In some embodiments, the communication system 100 includes a plurality of network devices, and each network devices covers other number of terminal devices, which is not limited in the embodiments of the present disclosure.

In some embodiments, the communication system 100 further includes a network controller, a mobile management entity, or other network entities, which is not limited in the embodiments of the present disclosure.

It should be noted that devices with the communication function in the network/system in the embodiments of the present disclosure are referred to as communication devices. By taking the communication system 100 shown in FIG. 1 as an example, the communication device includes the network device 110 and the terminal device 120 that have the communication function, and the network device 110 and the terminal device 120 are specific devices described above, which are not repeater herein. The communication device further includes other devices in the communication system 100, for example, the network controller, the mobile management entity, or other network entities, which is not limited in the embodiments of the present disclosure.

It should be understood that the terms "system" and "network" herein are interchangeably used. The term "and/or" herein describes an association relationship between associated objects, and indicates three types of relationships. For example, the phrase "A and/or B" means (A), (B), or (A and B). In addition, the symbol "/" generally indicates an "or" relationship between the associated objects.

It should be understood that the term "indicate" in the embodiments of the present disclosure means a direct indication, an indirect indication, or an indication that there is an associated relationship. For example, A indicating B means that A indicates B directly, e.g., B may be acquired by A; or that A indicates B indirectly, e.g., A indicates C by which B may be acquired; or that an association is present between A and B.

In the description of the embodiments of the present disclosure, the term "corresponding" mean that there is a direct correspondence or indirect correspondence between two objects, an association relationship between two objects, an indicating and being indicated relationship, or a configuring and being configured relationship.

In the embodiments of the present disclosure, the "predefinition" is achieved by pre-storing corresponding codes or forms in the device (for example, including the terminal device and the network device) or other means for indicating relevant information, and the specific implementations are not limited in the present disclosure. For example, the predefinition is defined in the protocol.

In the embodiments of the present disclosure, the "protocol" indicates standard protocols in the field of communications, for example, the LTE protocol, the NR protocol, and related protocols applied to the future communication system, which are not limited in the present disclosure.

Prior to description of the embodiments of the present disclosure, the related art is described.

In a new radio (NR) system, a network device may transmit measurement configuration information to a terminal device in a connected state over radio resource control (RRC) signaling. The terminal device performs a measurement (such as an intra-frequency measurement, an inter-frequency measurement, and an inter-RAT measurement) based on content of the measurement configuration information, and then report a measurement result to the network device.

In some embodiments, the measurement configuration information includes the following content:

1. MO

For the intra-frequency measurement and the inter-frequency measurement, each MO indicates a to-be-measured time-frequency position, a subcarrier spacing of a reference signal (RS), and a cell associated with the MO. In some embodiments, the network device may also configure a cell offset list, a cell blacklist, and a cell whitelist.

For the inter-RAT measurement, each MO may correspond to a separate evolved universal terrestrial radio access (E-UTRA) frequency and a cell associated with the E-UTRA frequency. In some embodiments, the network device may also configure a cell offset list, a cell blacklist, and a cell whitelist.

In event assessment and measurement reporting, the terminal device refrains from performing any operation on a cell included in the cell blacklist; and the terminal device performs the event assessment and the measurement reporting on a cell included in the cell whitelist.

For each MO, the network device configures a synchronization signal/physical broadcast channel (SS/PBCH) block measurement timing configuration (SMTC) to indicate a time when the terminal device receives a synchronization signal block (SSB) on a neighboring cell corresponding to the MO.

In some embodiments, a configuration of the SMTC includes a period of the SMTC, a start time offset of the SMTC within one period (i.e., an SMTC offset), a duration of the SMTC, and the like.

In some embodiments, the configuration of the SMTC may support periods of {5, 10, 20, 40, 80, 160} ms and window lengths (duration) of {1, 2, 3, 4, 5} ms. Correspondingly, each SMTC offset is strongly correlated with the period and its value is {0, ..., period-1}.

2. Reporting configuration

Each MO corresponds to at least one reporting configuration.

In some embodiments, for example, the reporting configuration may include following information:

    Reporting criterion: This is a triggering condition for the terminal device to perform the measurement reporting, for example, periodically triggered reporting or event triggered reporting.
    RS type: This indicates an RS used by the terminal device for beam and cell measurements, for example, an SS/PBCH block or a channel state information reference signal (CSI-RS).
    Reporting format: The terminal device reports an amount, for example, reference signal receiving power (RSRP) for a measurement of each cell and each beam. In some embodiments, other relevant information may also be included, such as a maximum quantity of cells reported by the terminal device and a maximum quantity of beams reported for each cell.

3. Measurement identity (ID)

As a separate ID, the measurement ID is used to associate the MO with the reporting configuration. In a case where one MO is associated with a plurality of reporting configurations simultaneously, or one reporting configuration is associated with a plurality of MOs simultaneously, the measurement ID is used for differentiation.

4. MG

This is used to indicate time information of performing the intra-frequency, inter-frequency, or inter-RAT measurement by the terminal device. Specifically, the terminal device performs the intra-frequency, inter-frequency, or inter-RAT measurement within the MG.

The network device may provide the terminal device with a per-user equipment (UE) MG configuration or a per-band (per-frequency range (FR)) MG configuration. In a case where the per-FR MG configuration is provided, the network device may provide MG configurations corresponding to a first frequency range (FR1) and a second frequency range (FR2) respectively, wherein the FR1 and the FR2 represent different bands.

In some embodiments, each MG configuration may include at least one of: a gap pattern ID, a measurement gap length (MGL), a measurement gap repetition period (MGRP), or a gap offset.

In some scenarios, in order to achieve MG sharing between the intra-frequency measurement and the inter-frequency measurement, an MG sharing mechanism is introduced. For example, the MG sharing is designed to coordinate an MG between an intra-frequency MO and an inter-frequency MO in the NR system.

In a case where two parties sharing an MG resource want to share the MG, they also need to determine how to share the MG, for example, determine a sharing proportion.

In some scenarios, for MG sharing between different types of measurements, the network device may configure a gap sharing mechanism (measGapSharingScheme) to indicate respective sharing proportions of two parties involved in the MG sharing.

In some implementations, a configuration of the measGapSharingScheme may include: gap sharing FR1, gap sharing FR2, and gap sharing UE.

Table 1

| measGapSharingScheme | Value of X (%) |
| --- | --- |
| 00 | Equal splitting |
| 01 | 25 |
| 10 | 50 |
| 11 | 75 |

As illustrated in Table 1, there are four possible values for the measGapSharingScheme, wherein each value corresponds to its own value of X. The value of X is used to indicate a proportion of the MG resource occupied by a first party of the two parties sharing the MG resource.

For example, in a case where the terminal device operates in an SA mode, the two parties sharing the MG resource are an MO of an NR intra-frequency measurement and an MO of an NR inter-frequency measurement respectively. Assuming that the value of the measGapSharingScheme configured by the network device is 01, then the MO of the NR intra-frequency measurement may occupy 25% of a GAP resource, and the MO of the NR inter-frequency measurement may occupy 75% of the GAP resource.

For another example, in a case where the value of the measGapSharingScheme configured by the network device is 00, each MO of each measurement type needs to share the MG resource using an equal splitting scheme.

In some scenarios, a to-be-scaled measurement time length may also be determined based on X, for example, the to-be-scaled measurement time length may be determined according to Formulas 1 and 2:

$$K_{intra} = \frac{1}{x} \times 100 \qquad \text{Formula 1}$$

$$K_{inter} = \frac{1}{(100-1)} \times 100 \qquad \text{Formula 2}$$

In the above formulas, $K_{intra}$ represents a to-be-scaled measurement time length converted based on an MG for the intra-frequency measurement, and $K_{inter}$ represents a to-be-scaled measurement time length converted based on an MG for the inter-frequency measurement.

For example, the value of the measGapSharingScheme is 01, which indicates that the value of X is 25, and the intra-frequency measurement occupies 25% of the MG resource. In accordance with Formula 1, it may be determined that $K_{intra}$ is 4, which indicates that measurement duration of the intra-frequency measurement is extended by 4 times. In a case where the value of X is 25, the inter-frequency measurement occupies 75% of the MG resource. In accordance with Formula 2, it may be determined that $K_{inter}$ is 4/3, which indicates that the measurement duration of the intra-frequency measurement is extended by 4/3 times.

In an SA scenario, the MG sharing mechanism is designed to coordinate allocation of MG resources between the MOs for intra-frequency measurement and inter-frequency measurements. However, in practice, the deployment scenarios are complex and diverse. For example, different network operators may adopt different network deployment strategies, possess different frequency and spectrum plans, or use different bearer networks for carrying special services such as voice, and need to preferentially perform some measurements, for example a measurement for an LTE network in an E-UTRA-NR dual connectivity (EN-DC) mode. In this case, how to share MG resources is an urgent problem to be solved.

For a better understanding of the technical solutions according to the embodiments of the present disclosure, the technical solutions are described in detail hereinafter with reference to some specific embodiments. The related technologies described above, as optional solutions, may be arbitrarily combined with the technical solutions according to the embodiments of the present disclosure, and all fall within the protection scope of the embodiments of the present disclosure. The embodiments of the present disclosure include at least part of following content.

FIG. 2 is a schematic flowchart of a method 200 for wireless communication according to some embodiments of the present disclosure. The method 200 may be applicable to a terminal device in a communication system illustrated in FIG. 1. As illustrated in FIG. 2, the method 200 includes following processes.

In S210, the terminal device receives measurement configuration information, wherein the measurement configuration information is used to configure an MG, gap sharing information, and at least one MO. The gap sharing information is used to indicate a proportion of the MG occupied by an MO group. The MO group includes M groups, wherein M is an integer greater than or equal to 2, and each of the M groups includes at least one MO.

In S220, the terminal device performs a measurement on the at least one MO within the MG based on the gap sharing information.

For example, a proportion of the MG occupied by the at least one MO is determined based on a group to which the at least one MO belongs and the gap sharing information; and the measurement is performed on the at least one MO within the MG based on the proportion of the MG occupied by the at least one MO.

It should be understood that the present disclosure does not limit configuring the MG, the gap sharing information, and the least one MO to a specific method. For example, the MG, the gap sharing information, and the least one MO may be configured over one piece of signaling or a plurality of pieces of signaling.

It should be understood that the present disclosure does not limit the MG to a specific configuration granularity. For example, the MG may be at a granularity of the terminal device, a granularity of a band, a granularity of a network control small gap (NCSG), or a granularity of a band combination.

That is, the MG in the embodiments of the present disclosure may be a per-UE MG, a per-FR MG, a per-NCSG MG, or a per-band combination MG.

In some embodiments, the measurement includes but is not limited to at least one of: an SSB-based measurement, a CSI-RS-based measurement, a received signal strength indication (RSSI) and channel occupancy measurement, or a positioning reference signal (PRS) measurement.

In some embodiments, the gap sharing information includes N bits, wherein N is an integer greater than or equal to 2.

In some embodiments, the gap sharing information may be indication information of an MG sharing mechanism (measGapSharingScheme).

In some embodiments, N may be 2.

In some embodiments, the terminal device supports working in a dual connectivity (DC) mode. That is, the terminal device supports the DC mode. The DC mode may also be replaced by a multi-connectivity mode.

For example, the terminal device supports an EN-DC mode, an NR-E-UTRA dual connectivity (NE-DC) mode, and an NR-NR dual connectivity (NR-DC) mode.

In some embodiments, the NR-DC mode includes at least one of:

a first NR-DC mode, wherein two connected bands in the first NR-DC mode both belong to the FR1; a second NR-DC mode, wherein two connected bands in the second NR-DC mode both belong to the FR2; or
a third NR-DC mode, wherein two connected bands in the third NR-DC mode belong to the FR1 and the FR2 respectively.

In some embodiments, the at least one MO is an MO in the DC mode.

In some embodiments, the MO group includes M groups, wherein M is an integer greater than or equal to 2, and each group includes one or more MOs. That is, there are at least two MO groups.

In some embodiments, the M groups are predefined or are configured by a network device.

In some embodiments, measurement types corresponding to MOs in the M groups include but are not limited to at least one of: an intra-frequency measurement, an inter-frequency measurement, an inter-RAT measurement, or the PRS measurement.

In some embodiments, the measurement types corresponding to the MOs in the M groups include but are not limited to at least one of: an NR intra-frequency measurement, an NR inter-frequency measurement, an E-UTRA inter-frequency measurement, an UTRA inter-RAT measurement, a global system for mobile communications (GSM) inter-RAT measurement, a reference signal time difference (RSTD) measurement, or the PRS measurement.

That is, the MOs in the M groups include but are not limited to at least one of: an NR intra-frequency MO, an NR inter-frequency MO, an E-UTRA inter-frequency MO, a UTRA inter-RAT MO, a GSM inter-RAT MO, an RSTD MO, or a PRS.

In some embodiments, the M groups may be obtained through division based on at least one of: a measurement type corresponding to the MO, a cell group corresponding to the MO, a band corresponding to the MO, a band list corresponding to the MO, or a band combination corresponding to the MO.

For example, MOs in each of the M groups correspond to a same measurement type, while MOs in different groups correspond to different measurement types.

For another example, MOs in each of the M groups correspond to a same cell group, while MOs in different groups correspond to different cell groups.

In some embodiments, a network operator may flexibly set the MO group based on an expected measurement priority or a business requirement, so as to preferentially perform an expected measurement to meet the business requirement.

In some embodiments, the M groups include a first group and a second group, and a measurement type corresponding to an MO in the first group is the same as or different from a measurement type corresponding to an MO in the second group. That is, the MO in the first group and the MO in the second group may be of a same type or different types.

For example, both the MO in the first group and the MO in the second group are intra-frequency MOs.

For example, the MO in the first group is an intra-frequency MO, and the MO in the second group includes an inter-frequency MO and/or an inter-RAT MO.

In some embodiments, the first group includes an MO in a master cell group (MCG), a first cell group, or a first band list, and the second group includes an MO in a secondary cell group (SCG), a second cell group, or a second band list.

In a specific example, the first group may include the MO in the MCG, and the second group may include the MO in the SCG. The MO is grouped based on whether it belongs to the MCG or the SCG, which is conducive to allocating a different sharing proportion to the MO in the MCG or the SCG in a DC scenario, such that an MO in one of the cell groups is preferentially measured. For example, in a case where the MO in the MCG is preferentially measured, a larger sharing proportion is assigned to the first group, and in a case where the MO in the SCG is preferentially measured, a larger sharing proportion is assigned to the second group.

In another specific example, the first group may include the MO in the first cell group, and the second group may include the MO in the second cell group. The MO is grouped based on the cell group, which is conducive to allocating different sharing proportions to MOs in different cell groups, such that an MO in one of the cell groups is preferentially measured. For example, in a case where the MO in the first cell group is preferentially measured, a larger sharing proportion is assigned to the first group, and in a case where the MO in the second cell group is preferentially measured, a larger sharing proportion is assigned to the second group.

In still another specific example, the first group may include the MO in the first band list, and the second group may include the MO in the second band list. The MO is grouped based on a band list, which is conducive to allocating different sharing proportions to MOs in different band lists, such that an MO in one of the band lists is preferentially measured. For example, in a case where the MO in the first band list is preferentially measured, a larger sharing proportion is assigned to the first group, and in a case where the MO in the second band list is preferentially measured, a larger sharing proportion is assigned to the second group.

Therefore, in the embodiments of the present disclosure, the MO may be grouped based on a plurality of methods, providing the network operator with higher flexibility and meeting diverse measurement priority requirements of the network operator and flexible business requirements.

In some embodiments, both the MO in the first group and the MO in the second group belong to a same band, for example, belong to the FR1 or the FR2.

In some embodiments, both the MO in the first group and the MO in the second group belong to a same band list, for example, belong to the first band list or the second band list.

In some embodiments, both the MO in the first group and the MO in the second group belong to a same band combination, for example, belong to a first band combination or a second band combination.

In some embodiments, the MO in the first group and the MO in the second group belong to different bands.

For example, the MO in the first group belongs to the FR1, and the MO in the second group belongs to the FR2. Alternatively, the MO in the first group belongs to the FR2, and the MO in the second group belongs to the FR1.

In some embodiments, the MO in the first group and the MO in the second group belong to different band lists.

For example, the MO in the first group belongs to the first band list, and the MO in the second group belongs to the second band list. Alternatively, the MO in the first group belongs to the second band list, and the MO in the second group belongs to the first band list.

In some embodiments, the MO in the first group and the MO in the second group belong to different band combinations.

For example, the MO in the first group belongs to the first band combination, and the MO in the second group belongs to the second band combination. Alternatively, the MO in the first group belongs to the second band combination, and the MO in the second group belongs to the first band combination.

In some embodiments, the first band list may include the FR1, and the second band list may include the FR2.

In some embodiments, a configured MO on the terminal device may be grouped, while an MO not configured is not grouped. For example, the MO is grouped based on the measurement type corresponding to the MO.

In some embodiments, the configured MO may include but is not limited to at least one of: the intra-frequency MO, the inter-frequency MO, the inter-RAT MO, or the PRS measurement.

For example, the configured MO only includes the intra-frequency MO, the configured intra-frequency MO may be grouped.

For another example, the configured MO includes the intra-frequency MO and the inter-frequency MO or the inter-RAT MO, the intra-frequency MO may be added to a group, and the inter-frequency MO or the inter-RAT MO may be added to another group.

For example, the configured MO includes the intra-frequency MO and the inter-RAT MO, the intra-frequency MO may be added to a group, and the inter-RAT MO may be added to another group.

For another example, the configured MO includes the intra-frequency MO, the inter-frequency MO, and the inter-RAT MO, the intra-frequency MO may be added to a group, and the inter-frequency MO and the inter-RAT MO may be added to another group.

In some embodiments, in a case where the terminal device is not configured with the inter-frequency measurement, the inter-RAT measurement, or the PRS measurement in the DC mode, in the DC mode, an intra-frequency MO in the MCG belongs to the first group, and an intra-frequency MO in the SCG belongs to the second group.

In some embodiments, the DC mode herein may be the NR-DC mode.

For example, if the number of configured inter-frequency MOs on the terminal device, the number of configured inter-RAT MOs on the terminal device, and the number of configured PRS measurements on all positioning frequency layers are all zero, the intra-frequency MO in the MCG is added to the first group, and the intra-frequency MO in the SCG is added to the second group.

In some embodiments, in a case where the terminal device is configured with the inter-frequency measurement and/or the inter-RAT measurement but not configured with the PRS measurement in the DC mode, the intra-frequency MO in the MCG is added to the first group, and inter-frequency MOs and/or inter-RAT MOs in the MCG and the SCG are added to the second group.

For example, the number of configured inter-frequency and inter-RAT MOs on the terminal device is non-zero, and the number of configured PRS measurements on all the positioning frequency layers is zero, the intra-frequency MO in the MCG is added to the first group, and the inter-frequency MOs and/or the inter-RAT MOs in the MCG and the SCG are added to the second group.

In some embodiments, the gap sharing information is used to indicate a proportion of the MG occupied by the MO in the first group or the second group.

In some embodiments, if it is necessary to preferentially measure the MO in the first group, the proportion of the MG occupied by the first group may be configured to be relatively large, for example, greater than 50%.

In some embodiments of the present disclosure, the method 200 further includes the following process:
In S201, the terminal device transmits first capability information to the network device, wherein the first capability information is used to indicate whether the terminal device supports sharing the MG based on the gap sharing information to perform the measurement on the at least one MO.

In some embodiments, the first capability information is used to indicate whether the terminal device supports sharing the MG based on the gap sharing information to perform the measurement on the at least one MO in a multi-RAT dual connectivity (MR-DC) mode.

That is, in the MR-DC mode, the terminal device shares the MG based on the gap sharing information to perform the measurement on the at least one MO.

In some embodiments, the first capability information is used to indicate whether the terminal device supports sharing the MG based on the gap sharing information to perform the measurement on the at least one MO in a plurality of DC modes.

In some embodiments, the first capability information indicates, by a bitmap, whether the terminal device supports sharing the MG based on the gap sharing information to perform the measurement on the at least one MO in the plurality of DC modes.

In some embodiments, the plurality of DC modes include at least one of: the EN-DC mode, the NE-DC mode, or the NR-DC mode.

The NR-DC mode includes at least one of:

the first NR-DC mode, wherein the two connected bands in the first NR-DC mode both belong to the FR1;
the second NR-DC mode, wherein the two connected bands in the second NR-DC mode both belong to the FR2; or
the third NR-DC mode, wherein the two connected bands in the third NR-DC mode belong to the FR1 and the FR2 respectively.

For example, the first capability information may include K bits, and each bit corresponds to one DC mode. A value of each bit is used to indicate whether the terminal device supports sharing the MG based on the gap sharing information to perform the measurement on the at least one MO in the corresponding DC mode. K represents a quantity of DC modes.

In some embodiments of the present disclosure, the method 200 further includes the following process:
The terminal device performs the measurement on the at least one MO based on the first capability information and/or the gap sharing information.

In some embodiments, in a case where the first capability information indicates that the terminal device supports sharing the MG based on the gap sharing information to perform the measurement on the at least one MO, the MG is shared based on the gap sharing information, and the measurement on the at least one MO is performed. In some embodiments, the at least one MO may be at least one MO in the DC mode, and the DC mode herein may be the above example DC modes.

For example, the terminal device performs the measurement on at least one MO in the NR-DC mode based on the gap sharing information.

For another example, the terminal device performs the measurement on at least one MO in the NE-DC mode based on the gap sharing information.

For still another example, the terminal device performs the measurement on at least one MO in the EN-DC mode based on the gap sharing information.

In addition, for example, the terminal device performs the measurement on at least one MO in at least one of the NR-DC mode, the NE-DC mode, or the EN-DC mode based on the gap sharing information.

In some embodiments, the process that the terminal device performs the measurement on the at least one MO based on the first capability information and/or the gap sharing information includes:
in a case where the first capability information indicates that the terminal device does not support sharing the MG based on the gap sharing information to perform the measurement on the at least one MO, the MG is shared using an equal splitting scheme, and the measurement is performed on the at least one MO.

In summary, in the embodiments of the present disclosure, MOs are grouped, and a proportion of an MG shared by a group is configured based on gap sharing information. This provides higher flexibility for a network operator, thereby preferentially achieving a measurement under any desired RAT and meeting flexible mobile service requirements.

Moreover, the gap sharing information indicates a plurality of different sharing proportions of the MG occupied by the group of the MO. In this way, measurement priorities for various needs may be configured based on the sharing proportions to perform a mobility measurement on each MO, such that diverse measurement priority requirements of various networks or operators are effectively met.

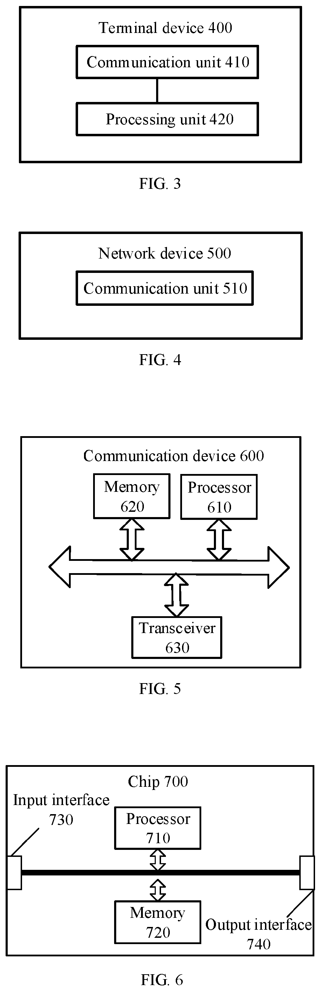

The above provides a detailed description of the method embodiments of the present disclosure with reference to FIG. 2. The following provides a detailed description of device embodiments of the present disclosure with reference to FIG. 3 to FIG. 7. It should be understood that the device embodiments correspond to the method embodiments, and for similar descriptions, reference may be made to the method embodiments.

FIG. 3 is a schematic block diagram of a terminal device 400 according to some embodiments of the present disclosure. As illustrated in FIG. 3, the terminal device 400 includes:

a communication unit 410, configured to receive measurement configuration information, wherein the measurement configuration information is used to configure an MG, gap sharing information, and at least one MO, wherein the gap sharing information is used to indicate a proportion of the MG occupied by an MO group, wherein the MO group includes M groups, wherein M is an integer greater than or equal to 2, and each of the M groups includes one or more MOs; and
a processing unit 420, configured to perform a measurement on the at least one MO within the MG based on the gap sharing information.

In some embodiments, the processing unit 420 is further configured to:

determine, based on a group to which the at least one MO belongs and the gap sharing information, a proportion of the MG occupied by the at least one MO; and
perform the measurement on the at least one MO within the MG based on the proportion of the MG occupied by the at least one MO.

In some embodiments, the M groups are predefined or are configured by a network device.

In some embodiments, measurement types corresponding to MOs in the M groups include at least one of:
an NR intra-frequency measurement, an NR inter-frequency measurement, an E-UTRA inter-frequency measurement, a UTRA inter-RAT measurement, a GSM inter-RAT measurement, an RSTD measurement, or a PRS measurement.

In some embodiments, the M groups include a first group and a second group, wherein a measurement type corresponding to an MO in the first group is the same as or different from a measurement type corresponding to an MO in the second group.

In some embodiments, the first group includes an MO in an MCG, a first cell group, or a first band list, and the second group includes an MO in an SCG, a second cell group, or a second band list.

In some embodiments, both the MO in the first group and the MO in the second group belong to an FR1, the first band list, or a first band combination; or

both the MO in the first group and the MO in the second group belong to an FR2, the second band list, or a second band combination; or
the MO in the first group belongs to an FR1, the first band list, or a first band combination, and the MO in the second group belongs to an FR2, the second band list, or a second band combination; or
the MO in the first group belongs to an FR2, the second band list, or a second band combination, and the MO in the second group belongs to an FR1, the first band list, or a first band combination.

In some embodiments, the terminal device supports a DC mode, wherein two bands in the DC mode both belong to the FR1, or both belong to the FR2, or belong to the FR1 and the FR2 respectively.

In some embodiments, in a case where the terminal device is not configured with an inter-frequency measurement, an inter-RAT measurement, or a positioning measurement in the DC mode, in the DC mode, an intra-frequency MO in the MCG belongs to the first group, and an intra-frequency MO in the SCG belongs to the second group.

In some embodiments, in a case where the terminal device is configured with the inter-frequency measurement and/or the inter-RAT measurement but not configured with the positioning measurement in the DC mode, in the DC mode, the intra-frequency MO in the MCG belongs to the first group, and inter-frequency MOs and/or inter-RAT MOs in the MCG and the SCG belong to the second group.

In some embodiments, the communication unit 410 is further configured to:

transmit first capability information to the network device, wherein the first capability information is used to indicate whether the terminal device supports sharing the MG based on the gap sharing information to perform the measurement on the at least one MO.

In some embodiments, the processing unit 420 is further configured to:

in a case where the first capability information indicates that the terminal device supports sharing the MG based on the gap sharing information to perform the measurement on the at least one MO, perform the measurement on the at least one MO based on the gap sharing information.

In some embodiments, the processing unit 420 is further configured to:

in a case where the first capability information indicates that the terminal device does not support sharing the MG based on the gap sharing information to perform the measurement on the at least one MO, share the MG using an equal splitting scheme, and perform the measurement on the at least one MO.

In some embodiments, the first capability information is used to indicate whether the terminal device supports sharing the MG based on the gap sharing information to perform the measurement on the at least one MO in an MR-DC mode.

In some embodiments, the first capability information is used to indicate whether the terminal device supports sharing the MG based on the gap sharing information to perform the measurement on the at least one MO in a plurality of DC modes.

In some embodiments, the first capability information indicates, through a bitmap, whether to support sharing the MG based on the gap sharing information to perform the measurement on the at least one MO in the plurality of DC modes.

In some embodiments, the plurality of DC modes include at least one of: an EN-DC mode, an NE-DC mode, or an NR-DC mode.

The NR-DC mode includes at least one of following modes:

a first NR-DC mode, wherein two connected bands in the first NR-DC mode both belong to the FR1; a second NR-DC mode, wherein two connected bands in the second NR-DC mode both belong to the FR2; or a third NR-DC mode, wherein two connected bands in the third NR-DC mode belong to the FR1 and the FR2 respectively.

In some embodiments, the at least one MO is at least one MO in the DC mode.

In some embodiments, the gap sharing information includes N bits, N being an integer greater than or equal to 2.

In some embodiments, the MG is at a granularity of the terminal device, a granularity of a band, a granularity of an NCSG, or a granularity of a band combination.

In some embodiments, the measurement includes at least one of: an SSB-based measurement, a CSI-RS-based measurement, an RSSI and channel occupancy measurement, or the PRS measurement.

In some embodiments, in some embodiments, the communication unit may be a communication interface or transceiver, or an input/output interface of a communication chip or a system on chip. The processing unit may be at least one processor.

It should be understood that the terminal device 400 in the embodiments of the present disclosure may correspond to the terminal device in the method embodiments of the present disclosure, and the foregoing and other operations and/or functions of the units in the terminal device 400 are for implementing a corresponding process of the terminal device in the method 200 illustrated in FIG. 2. For brevity, details are not described herein again.

FIG. 4 is a schematic block diagram of a network device according to some embodiments of the present disclosure. The network device 500 in FIG. 4 includes:

a communication unit 510, configured to transmit measurement configuration information to a terminal device, wherein the measurement configuration information is used to configure an MG, gap sharing information, and at least one MO, wherein the gap sharing information is used to indicate a proportion of the MG occupied by an MO group, wherein the MO group includes M groups, wherein M is an integer greater than or equal to 2, and each of the M groups includes one or more MOs.

In some embodiments, the at least one MO is at least one MO in a DC mode.

In some embodiments, the M groups are predefined or are configured by the network device.

In some embodiments, measurement types corresponding to MOs in the M groups include at least one of: an NR intra-frequency measurement, an NR inter-frequency measurement, an E-UTRA inter-frequency measurement, a UTRA inter-RAT measurement, a GSM inter-RAT measurement, an RSTD measurement, or a PRS measurement.

In some embodiments, the M groups include a first group and a second group, wherein a measurement type corresponding to an MO in the first group is the same as or different from a measurement type corresponding to an MO in the second group.

In some embodiments, the first group includes an MO in an MCG, a first cell group, or a first band list, and the second group includes an MO in an SCG, a second cell group, or a second band list.

In some embodiments, both the MO in the first group and the MO in the second group belong to an FR1, the first band list, or a first band combination; or

both the MO in the first group and the MO in the second group belong to an FR2, the second band list, or a second band combination; or

the MO in the first group belongs to an FR1, the first band list, or a first band combination, and the MO in the second group belongs to an FR2, the second band list, or a second band combination; or

the MO in the first group belongs to an FR2, the second band list, or a second band combination, and the MO in the second group belongs to an FR1, the first band list, or a first band combination.

In some embodiments, the terminal device supports the DC mode, and two bands in the DC mode both belong to the FR1, or both belong to the FR2, or belong to the FR1 and the FR2 respectively.

In some embodiments, in a case where the terminal device is not configured with an inter-frequency measurement, an inter-RAT measurement, or a positioning measurement in the DC mode, in the DC mode, an intra-frequency MO in the MCG belongs to the first group, and an intra-frequency MO in the SCG belongs to the second group.

In some embodiments, in a case where the terminal device is configured with the inter-frequency measurement and/or the inter-RAT measurement but not configured with the positioning measurement in the DC mode, in the DC mode, the intra-frequency MO in the MCG belongs to the first group, and inter-frequency MOs and/or inter-RAT MOs in the MCG and the SCG belong to the second group.

In some embodiments, the communication unit 510 is further configured to: receive first capability information from the terminal device, wherein the first capability information is used to indicate whether the terminal device supports sharing the MG based on the gap sharing information to perform the measurement on the at least one MO.

In some embodiments, the first capability information is used to indicate whether the terminal device supports sharing the MG based on the gap sharing information to perform the measurement on the at least one MO in an MR-DC mode.

In some embodiments, the first capability information is used to indicate whether the terminal device supports sharing the MG based on the gap sharing information to perform the measurement on the at least one MO in a plurality of DC modes.

In some embodiments, the first capability information indicates, by a bitmap, whether to support sharing the MG based on the gap sharing information to perform the measurement on the at least one MO in the plurality of DC modes.

In some embodiments, the plurality of DC modes include at least one of: an EN-DC mode, an NE-DC mode, or an NR-DC mode.

The NR-DC mode includes at least one of:

a first NR-DC mode, wherein two connected bands in the first NR-DC mode both belong to the FR1;

a second NR-DC mode, wherein two connected bands in the second NR-DC mode both belong to the FR2; or

a third NR-DC mode, wherein two connected bands in the third NR-DC mode belong to the FR1 and the FR2 respectively.

In some embodiments, the gap sharing information includes N bits, N being an integer greater than or equal to 2.

In some embodiments, the MG is at a granularity of the terminal device, a granularity of a band, a granularity of an NCSG, or a granularity of a band combination.

In some embodiments, the measurement includes at least one of: an SSB-based measurement, a CSI-RS-based measurement, an RSSI and channel occupancy measurement, or the PRS measurement.

In some embodiments, in some embodiments, the communication unit may be a communication interface or transceiver, or an input/output interface of a communication chip or a system on chip. The processing unit may be at least one processor.

It should be understood that the network device 500 in the embodiments of the present disclosure may correspond to the network device in the method embodiments of the present disclosure, and the foregoing and other operations and/or functions of the units in the network device 500 are for implementing a corresponding process of the network device in the method 200 illustrated in FIG. 2. For brevity, details are not described herein again.

FIG. 5 is a schematic block diagram of a communication device 600 according to some embodiments of the present disclosure. The communication device 600 shown in FIG. 5 includes a processor 610. The processor 610, when loading and running one or more computer programs in a memory, is caused to perform the method according to the embodiments of the present disclosure.

In some embodiments, as shown in FIG. 5, the communication device 600 further includes a memory 620. The processor 610, when loading and running one or more computer programs in the memory 620, is caused to perform the method according to the embodiments of the present disclosure.

The memory 620 is a device separate from the processor 610, or is integrated in the processor 610.

In some embodiments, as shown in FIG. 5, the communication device 600 further includes a transceiver 630. The processor 610 controls communication of the transceiver 630 with other devices. In particular, the transceiver 630 transmits information or data to other devices, or receives information or data from other devices.

The transceiver 630 includes a transiter and a receiver. The transceiver 630 further includes one or more antennas.

In some embodiments, the communication device 600 is the network device in the embodiments of the present disclosure, and performs the corresponding processes performed by the network device in the method according to the embodiments of the present disclosure, which are not described herein for brevity.

In some embodiments, the communication device 600 is the mobile terminal/terminal device in the embodiments of the present disclosure, and performs the corresponding processes performed by the mobile terminal/terminal device in the method according to the embodiments of the present disclosure, which are not described herein for brevity.

FIG. 6 is a schematic block diagram of a chip according to some embodiments of the present disclosure. The chip 700 shown in FIG. 6 includes a processor 710. The processor 710, when loading and running one or more computer programs in a memory, is caused to perform the method according to the embodiments of the present disclosure.

In some embodiments, as shown in FIG. 6, the chip 700 further includes a memory 720. The processor 710, when loading and running one or more computer programs in the memory 720, is caused to perform the method according to the embodiments of the present disclosure.

The memory 720 is a device separate from the processor 710, or is integrated in the processor 710.

In some embodiments, the chip 700 further includes an input interface 730. The processor 710 controls communication of the input interface 730 with other devices or chips. In particular, the input interface 730 acquires information or data from other devices or chips.

In some embodiments, the chip 700 further includes an output interface 740. The processor 710 controls communication of the output interface 740 with other devices or chips. In particular, the output interface 740 outputs information or data to other devices or chips.

In some embodiments, the chip 700 is applicable to the network device in the embodiments of the present disclosure, and performs the corresponding processes performed by the network device in the method according to the embodiments of the present disclosure, which are not described herein for brevity.

In some embodiments, the chip 700 is applicable to the mobile terminal/terminal device in the embodiments of the present disclosure, and performs the corresponding processes performed by the mobile terminal/terminal device in the method according to the embodiments of the present disclosure, which are not described herein for brevity.

It should be understood that the chip in the embodiments of the present disclosure is also referred to as a system-level chip, a system chip, a chip system, a system-on-chip, or the like.

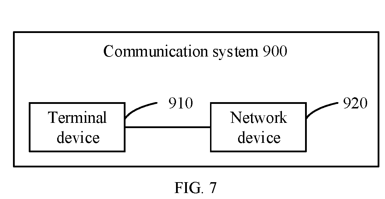

FIG. 7 is a schematic block diagram of a communication system 900 according to some embodiments of the present disclosure. As shown in FIG. 7, the communication system 900 includes a terminal device 910 and a network device 920.

The terminal device 910 is configured to implement the corresponding functions implemented by the terminal device in the above method, and the network device 920 is configured to implement the corresponding functions implemented by the network device in the above method, which are not repeated for brevity.

It should be understood that the processor in the embodiments of the present disclosure is an integrated circuit chip with a signal processing capability. In the implementations, the processes in the embodiments of the method are achieved by integrated logic circuits of hardware in the processor or instructions in the software form. The above processor is a general processor, a digital signal processor (DSP), an application specific integrated circuit (ASIC), a field programmable gate array (FPGA), other programmable logic devices, discrete gates, transistor logic devices, or discrete hardware assemblies that can achieve or perform various methods, processes, and logic blocks according to the embodiments of the present disclosure. The general processor is a microprocessor, any conventional processor, or the like. The processes in conjunction with the method in the embodiments of the present disclosure are directly embodied as a hardware decoding processor for processing or are performed by a combination of hardware and software modules in the decoding processor. The software modules are disposed in a random access memory, a flash memory, a read-only memory (ROM), a programmable ROM (PROM), an electrically erasable PROM (EPROM), a register, and other storage mediums mature in the field. The storage medium is disposed in the memory, and the processor reads the information in the memory and combines with its hardware to perform the processes of the above method.

It should be understood that the memory in embodiments of the present disclosure is a volatile or non-volatile memory, or includes both the volatile memory and the non-volatile memory. The non-volatile memory is a ROM, a PROM, an EPROM, an electrically EPROM (EEPROM), or a flash memory. The volatile memory is a random access memory (RAM) used as an external buffer. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). It should be noted that the system and the memory described herein are intended to include, but not limit to these and any other suitable type of memory.

It should be understood that the above memory are exemplary but not for limitation. For example, the memory in the embodiments of the present disclosure is also an SRAM, a DRAM, an SDRAM, a DDR SDRAM, an ESDRAM, an SLDRAM, a DR RAM, or the like. That is, the memory in the embodiments of the present disclosure is intend to include, but not limit to these and any other suitable type of memory.

Embodiments of the present disclosure further provide a computer-readable storage medium for storing one or more computer programs.

In some embodiments, the computer-readable storage medium is applicable to the network device in the embodiments of the present disclosure, and the one or more computer programs cause the computer to perform the corresponding processes performed by the network device in the method according to the embodiments of the present disclosure, which are not described herein for brevity.

In some embodiments, the computer-readable storage medium is applicable to the mobile terminal/terminal device in the embodiments of the present disclosure, and the one or more computer programs cause the computer to perform the corresponding processes performed by of the mobile terminal/terminal device in the method according to the embodiments of the present disclosure, which are not described herein for brevity.

Embodiments of the present disclosure further provide a computer program product including one or more computer program instructions.

In some embodiments, the computer program product is applicable to the network device in the embodiments of the present disclosure, and the one or more computer program instructions, when loaded and executed by a computer, cause the computer to achieve the corresponding processes performed by the network device in the method according to the embodiments of the present disclosure, which are not described herein for brevity.

In some embodiments, the computer program product is applicable to the mobile terminal/terminal device in the embodiments of the present disclosure, and the one or more computer program instructions, when loaded and executed by a computer, cause the computer to perform the corresponding processes performed by the mobile terminal/terminal device in the method according to the embodiments of the present disclosure, which are not described herein for brevity.

Embodiments of the present disclosure further provide a computer program.

In some embodiments, the computer program is applicable to the network device in the embodiments of the present disclosure, and the computer program, when loaded and run on a computer, causes the computer to perform the corresponding processes performed by the network device in the method according to the embodiments of the present disclosure, which are not described herein for brevity.

In some embodiments, the computer program is applicable to the mobile terminal/terminal device in the embodiments of the present disclosure, and the computer program, when loaded and run on a computer, causes the computer to perform the corresponding processes performed by the mobile terminal/terminal device in the method according to the embodiments of the present disclosure, which are not described herein for brevity.

It can be understood by those of ordinary skill in the art that the units and algorithmic processes of the examples described in conjunction with the embodiments disclosed herein can be achieved by the electronic hardware, or by a combination of the computer software and the electronic hardware. Whether these functions are implemented by the hardware or the software depends on the specific application and design constraints of the technical solution. For each application, those skilled in the art may use different methods to achieve the described functions, and such implementations should not be considered beyond the scope of the present disclosure.

It can be understood by those skilled in the art that for the specific operation processes of the system, device, and unit described above, reference may be made to the corresponding processes in the above embodiments of the method for convenience and simplicity of description, which are not described herein.

In the embodiments of the present disclosure, it should be understood that the systems, devices, and methods can be implemented in other ways. For example, the above embodiments of the device are only exemplary. For example, the division of the units is only the logical function division, and the actual implementation may have another division. For example, several units or assemblies can be combined or integrated into another system, or some features can be ignored or not performed. In addition, the coupling, the direct coupling, or the communication connection between each other may be achieved by some interfaces, and an indirect coupling or communication connection between devices or units may be electrical, mechanical or in other form.

The units described as separate parts may or may not be physically separate, and the parts shown as the units may or may not be physical units. That is, the parts may be disposed in one place, or distributed in several network units. Some or all of the units can be selected according to actual needs to achieve the purpose of the technical solutions according to the embodiments.

In addition, the functional units in the embodiments of the present disclosure may be integrated in a processing unit or exist physically separately, or two or more units may be integrated in a unit.

In the case that the functions are achieved in the form of software functional units and sold or used as stand-alone products, the functions may be stored in a computer readable storage medium. Based on the understanding, the nature of the technical solutions of the present disclosure, the part contributed to the prior art, or the part of the technical solutions may be embodied in the form of a software product, and the software product is stored in a storage medium and includes a number of instructions for causing a computer device (which may be a personal computer, a server, a network equipment, or the like) to perform all or part of the processes of the method in various embodiments of the present disclosure. The above storage medium include: a U disk, a mobile hard disk, a ROM, a RAM, a disk, a disc, or other medium that can store program codes.

Described above are merely specific embodiments of the present disclosure, and the scope of protection of the present disclosure is not limited. Any changes or replacements made within the technical scope of the present disclosure by those skilled in the art should be encompassed within the scope of protection of the present disclosure. thus, the scope of protection of the present disclosure shall prevail in the scope of protection of the claims.

**Claims**

1.  A method for wireless communication, applicable to a terminal device, the method comprising:

    receiving measurement configuration information, wherein the measurement configuration information is used to configure a measurement gap (MG), gap sharing information, and at least one measurement object (MO), wherein the gap sharing information is used to indicate a proportion of the MG occupied by an MO group, the MO group comprising M groups, wherein M is an integer greater than or equal to 2, and each of the M groups comprises one or more MOs; and performing a measurement on the at least one MO within the MG based on the gap sharing information.

2.  The method according to claim 1, wherein performing the measurement on the at least one MO within the MG based on the gap sharing information comprises:

    determining, based on a group to which the at least one MO belongs and the gap sharing information, a proportion of the MG occupied by the at least one MO; and performing the measurement on the at least one MO within the MG based on the proportion of the MG occupied by the at least one MO.

3.  The method according to claim 1 or 2, wherein the M groups are predefined or are configured by a network device.

4.  The method according to any one of claims 1 to 3, wherein measurement types corresponding to MOs in the M groups comprise at least one of:
    a new radio (NR) intra-frequency measurement, an NR inter-frequency measurement, an evolved universal terrestrial radio access (E-UTRA) inter-frequency measurement, a universal terrestrial radio access (UTRA) inter-radio access technology (RAT) measurement, a global system for mobile communications (GSM) inter-RAT measurement, a reference signal time difference (RSTD) measurement, or a positioning reference signal (PRS) measurement.

5.  The method according to any one of claims 1 to 4, wherein the M groups comprise a first group and a second group, wherein a measurement type corresponding to an MO in the first group is the same as or different from a measurement type corresponding to an MO in the second group.

6.  The method according to claim 5, wherein the first group comprises an MO in a master cell group (MCG), a first cell group, or a first band list, and the second group comprises an MO in a secondary cell group (SCG), a second cell group, or a second band list.

7.  The method according to claim 5 or 6, wherein

    both the MO in the first group and the MO in the second group belong to a first frequency range (FR1), a first band list, or a first band combination; or
    both the MO in the first group and the MO in the second group belong to a second frequency range (FR2), a second band list, or a second band combination; or
    the MO in the first group belongs to an FR1, a first band list, or a first band combination, and the MO in the second group belongs to an FR2, a second band list, or a second band combination; or
    the MO in the first group belongs to an FR2, a second band list, or a second band combination, and the MO in the second group belongs to an FR1, a first band list, or a first band combination.

8.  The method according to any one of claims 5 to 7, wherein the terminal device supports a dual connectivity (DC) mode, wherein two bands in the DC mode both belong to a first frequency range (FR1), or both belong to a second frequency range (FR2), or belong to an FR1 and an FR2 respectively.

9.  The method according to any one of claims 5 to 8, wherein in a case where the terminal device is not configured with an inter-frequency measurement, an inter-radio access technology (RAT) measurement, or a positioning measurement in a dual connectivity (DC) mode, in the DC mode, an intra-frequency MO in a master cell group (MCG) belongs to the first group, and an intra-frequency MO in a secondary cell group (SCG) belongs to the second group.

10. The method according to any one of claims 5 to 8, wherein in a case where the terminal device is configured with an inter-frequency measurement and/or an inter-radio access technology (RAT) measurement but not configured with a positioning measurement in a dual connectivity (DC) mode, in the DC mode, an intra-frequency MO in a master cell group (MCG) belongs to the first group, and inter-frequency MOs and/or inter-RAT MOs in the MCG and a secondary cell group (SCG) belong to the second group.

11. The method according to any one of claims 1 to 10, further comprising:
transmitting first capability information to a network device, wherein the first capability information is used to indicate whether the terminal device supports sharing the MG based on the gap sharing information to perform the measurement on the at least one MO.

12. The method according to claim 11, wherein performing the measurement on the at least one MO within the MG based on the gap sharing information comprises:
in a case where the first capability information indicates that the terminal device supports sharing the MG based on the gap sharing information to perform the measurement on the at least one MO, sharing the MG based on the gap sharing information to perform the measurement on the at least one MO.

13. The method according to claim 11, further comprising:
in a case where the first capability information indicates that the terminal device does not support sharing the MG based on the gap sharing information to perform the measurement on the at least one MO, sharing the MG using an equal splitting scheme to perform the measurement on the at least one MO.

14. The method according to any one of claims 11 to 13, wherein the first capability information is used to indicate whether the terminal device supports sharing the MG based on the gap sharing information to perform the measurement on the at least one MO in a multi-radio access technology (RAT) dual connectivity (MR-DC) mode.

15. The method according to any one of claims 11 to 14, wherein the first capability information is used to indicate whether the terminal device supports sharing the MG based on the gap sharing information to perform the measurement on the at least one MO in a plurality of dual connectivity (DC) modes.

16. The method according to claim 15, wherein the first capability information indicates, by a bitmap, whether to support sharing the MG based on the gap sharing information to perform the measurement on the at least one MO in the plurality of DC modes.

17. The method according to claim 15 or 16, wherein the plurality of DC modes comprise at least one of:

an evolved universal terrestrial radio access (E-UTRA)-new radio (NR) dual connectivity (EN-DC) mode, an NR-E-UTRA dual connectivity (NE-DC) mode, or an NR dual connectivity (NR-DC) mode;
wherein the NR-DC mode comprises at least one of:

a first NR-DC mode, wherein two connected bands in the first NR-DC mode both belong to a first frequency range (FR1);
a second NR-DC mode, wherein two connected bands in the second NR-DC mode both belong to a second frequency range (FR2); or
a third NR-DC mode, wherein two connected bands in the third NR-DC mode belong to an FR1 and an FR2 respectively.

18. The method according to any one of claims 1 to 17, wherein the at least one MO is at least one MO in a dual connectivity (DC) mode.

19. The method according to any one of claims 1 to 18, wherein the gap sharing information comprises N bits, N being an integer greater than or equal to 2.

20. The method according to any one of claims 1 to 19, wherein the MG is at a granularity of the terminal device, a granularity of a band, a granularity of a network controlled small gap (NCSG), or a granularity of a band combination.

21. The method according to any one of claims 1 to 20, wherein the measurement comprises at least one of:
a synchronization signal block (SSB)-based measurement, a channel state information reference signal (CSI-RS)-based measurement, a received signal strength indication (RSSI) and channel occupancy measurement, or a positioning reference signal (PRS) measurement.

22. A method for wireless communication, applicable to a network device, the method comprising:
transmitting measurement configuration information to a terminal device, wherein the measurement configuration information is used to configure a measurement gap (MG), gap sharing information, and at least one measurement object (MO), wherein the gap sharing information is used to indicate a proportion of the MG occupied by an MO group, the MO group comprising M groups, wherein M is an integer greater than or equal to 2, and each of the M groups comprises one or more MOs.

23. The method according to claim 22, wherein the at least one MO is at least one MO in a dual connectivity (DC) mode.

24. The method according to claim 22 or 23, wherein the M groups are predefined or are configured by the network device.

25. The method according to any one of claims 22 to 24, wherein measurement types corresponding to MOs in the M groups comprise at least one of:
a new radio (NR) intra-frequency measurement, an NR inter-frequency measurement, an evolved universal terrestrial radio access (E-UTRA) inter-frequency measurement, a universal terrestrial radio access (UTRA) inter-radio access technology (RAT) measurement, a global system for mobile communications (GSM) inter-RAT measurement, a reference signal time difference (RSTD) measurement, or a positioning reference signal (PRS) measurement.

26. The method according to any one of claims 22 to 25, wherein the M groups comprise a first group and a second group, wherein a measurement type corresponding to an MO in the first group is the same as or different from a measurement type corresponding to an MO in the second group.

27. The method according to claim 26, wherein the first group comprises an MO in a master cell group (MCG), a first cell group, or a first band list, and the second group comprises an MO in a secondary cell group (SCG), a second cell group, or a second band list.

28. The method according to claim 26 or 27, wherein

both the MO in the first group and the MO in the second group belong to a first frequency range (FR1), a first band list, or a first band combination; or
both the MO in the first group and the MO in the second group belong to a second frequency range (FR2), a second band list, or a second band combination; or
the MO in the first group belongs to an FR1, a first band list, or a first band combination, and the MO in the second group belongs to an FR2, a second band list, or a second band combination; or
the MO in the first group belongs to an FR2, a second band list, or a second band combination, and the MO in the second group belongs to an FR1, a first band list, or a first band combination.

29. The method according to any one of claims 26 to 28, wherein the terminal device supports the DC mode, wherein two bands in the DC mode both belong to a first frequency range (FR1), or both belong to a second frequency range (FR2), or belong to an FR1 and an FR2 respectively.

30. The method according to any one of claims 26 to 29, wherein in a case where the terminal device is not configured with an inter-frequency measurement, an inter-radio access technology (RAT) measurement, or a positioning measurement in a dual connectivity (DC) mode, in the DC mode, an intra-frequency MO in a master cell group (MCG) belongs to the first group, and an intra-frequency MO in a secondary cell group (SCG) belongs to the second group.

31. The method according to any one of claims 26 to 29, wherein in a case where the terminal device is configured with an inter-frequency measurement and/or an inter-radio access technology (RAT) measurement but not configured with a positioning measurement in a dual connectivity (DC) mode, in the DC mode, an intra-frequency MO in a master cell group (MCG) belongs to the first group, and inter-frequency MOs and/or inter-RAT MOs in the MCG and a secondary cell group (SCG) belong to the second group.

32. The method according to any one of claims 22 to 31, further comprising:
receiving first capability information from the terminal device, wherein the first capability information is used to indicate whether the terminal device supports sharing the MG based on the gap sharing information to perform a measurement on the at least one MO.

33. The method according to claim 32, wherein the first capability information is used to indicate whether the terminal device supports sharing the MG based on the gap sharing information to perform the measurement on the at least one MO in a multi-radio access technology (RAT) dual connectivity (MR-DC) mode.

34. The method according to claim 32 or 33, wherein the first capability information is used to indicate whether the terminal device supports sharing the MG based on the gap sharing information to perform the measurement on the at least one MO in a plurality of dual connectivity (DC) modes.

35. The method according to claim 34, wherein the first capability information indicates, by a bitmap, whether to support sharing the MG based on the gap sharing information to perform the measurement on the at least one MO in the plurality of DC modes.

36. The method according to claim 34 or 35, wherein the plurality of DC modes comprise at least one of:

an evolved universal terrestrial radio access (E-UTRA)-new radio (NR) dual connectivity (EN-DC) mode, an NR-E-UTRA dual connectivity (NE-DC) mode, or an NR dual connectivity (NR-DC) mode;
wherein the NR-DC mode comprises at least one of:

a first NR-DC mode, wherein two connected bands in the first NR-DC mode both belong to a first frequency range (FR1);
a second NR-DC mode, wherein two connected bands in the second NR-DC mode both belong to a second frequency range (FR2); or
a third NR-DC mode, wherein two connected bands in the third NR-DC mode belong to an FR1 and an FR2 respectively.

37. The method according to any one of claims 22 to 36, wherein the gap sharing information comprises N bits, N being an integer greater than or equal to 2.

38. The method according to any one of claims 22 to 37, wherein the MG is at a granularity of the terminal device, a granularity of a band, a granularity of a network controlled small gap (NCSG), or a granularity of a band combination.

39. The method according to any one of claims 22 to 38, wherein the measurement comprises at least one of: a synchronization signal block (SSB)-based measurement, a channel state information reference signal (CSI-RS)-based measurement, a received signal strength indication (RSSI) and channel occupancy measurement, or a positioning reference signal (PRS) measurement.

40. A terminal device, comprising:

a communication unit, configured to receive measurement configuration information, wherein the measurement configuration information is used to configure a measurement gap (MG), gap sharing information, and at least one measurement object (MO), wherein the gap sharing information is used to indicate a proportion of the MG occupied by an MO group, the MO group comprising M groups, wherein M is an integer greater than or equal to 2, and each of the M groups comprises one or more MOs; and
a processing unit, configured to perform a measurement on the at least one MO within the MG based on the gap sharing information.

41. A network device, comprising:
a communication unit, configured to transmit measurement configuration information to a terminal device, wherein the measurement configuration information is used to configure a measurement gap (MG), gap sharing information, and at least one measurement object (MO), wherein the gap sharing information is used to indicate a proportion of the MG occupied by an MO group, the MO group comprising M groups, wherein M is an integer greater than or equal to 2, and each of the M groups comprises one or more MOs.

42. A terminal device, comprising:

a processor and a memory;
wherein the memory is configured to store one or more computer programs, and the processor is configured to load and run the one or more computer programs stored in the memory, to cause the terminal device to perform the method as defined in any one of claims 1 to 21.

43. A network device, comprising:

a processor and a memory;
wherein the memory is configured to store one or more computer programs, and the processor is configured to load and run the one or more computer programs stored in the memory, to cause the network device to perform the method as defined in any one of claims 22 to 39.

44. A chip, comprising: a processor configured to load and run one or more computer programs in a memory, to cause a device equipped with the chip to perform the method as defined in any one of claims 1 to 21 or the method as defined in any one of claims 22 to 39.

45. A computer-readable storage medium, configured to store one or more computer programs, wherein the one or more computer programs cause a computer to perform the method as defined in any one of claims 1 to 21 or the method as defined in any one of claims 22 to 39.

46. A computer program product, comprising one or more computer program instructions, wherein the one or more computer program instructions cause a computer to perform the method as defined in any one of claims 1 to 21 or the method as defined in any one of claims 22 to 39.

47. A computer program, wherein the computer program causes a computer to perform the method as defined

**EP 4 607 992 A1**

in any one of claims 1 to 21 or the method as defined in any one of claims 22 to 39.

**100**

FIG. 1

200

| Terminal device | | Network device |
|---|---|---|

S201 Transmitting first capability information, wherein the first capability information is used to indicate whether to support sharing an MG based on gap sharing information to perform a measurement on at least one MO

S210 Receiving measurement configuration information, wherein the measurement configuration information is used to configure the MG, the gap sharing information, and the at least one MO

S220 Performing the measurement on the at least one MO within the MG based on the gap sharing information

FIG. 2

Terminal device 400

Communication unit 410

Processing unit 420

FIG. 3

Network device 500

Communication unit 510

FIG. 4

Communication device 600

Memory 620

Processor 610

Transceiver 630

FIG. 5

Chip 700

Input interface 730

Processor 710

Memory 720

Output interface 740

FIG. 6

Communication system 900

Terminal device — 910

Network device — 920

FIG. 7

## EP 4 607 992 A1

| INTERNATIONAL SEARCH REPORT | | International application No. |
|---|---|---|
| | | **PCT/CN2022/134236** |

**A. CLASSIFICATION OF SUBJECT MATTER**

H04W24/02(2009.01)i; H04L5/00(2006.01)i; H04L27/00(2006.01)i

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

3GPP, CNTXT, ENTXTC; CNKI: 测量间隔, MG, 测量间隙, 测量对象, MO, 比例, 比率, 分组, 共享; measure, gap, object, ratio, share

**C. DOCUMENTS CONSIDERED TO BE RELEVANT**

| Category* | Citation of document, with indication, where appropriate, of the relevant passages | Relevant to claim No. |
|---|---|---|
| X | WO 2021208111 A1 (GUANGDONG OPPO MOBILE TELECOMMUNICATIONS CORP., LTD.) 21 October 2021 (2021-10-21)<br>description, pages 2-11 | 1-47 |
| X | WO 2019193125 A1 (TELEFONAKTIEBOLAGET LM ERICSSON (PUBL)) 10 October 2019 (2019-10-10)<br>description, pages 4-24 | 1-47 |
| X | Huawei, HiSilicon. "R4-1809015, "Further discussion on gap sharing""<br>*3GPP tsg_ran\wg4_radio*, No. tsgr4_ahs, 26 June 2018 (2018-06-26),<br>sections 1-3 | 1-47 |
| A | CN 110831034 A (BEIJING SAMSUNG COMMUNICATION TECHNOLOGY RESEARCH CO., LTD.; SAMSUNG ELECTRONICS CO., LTD.) 21 February 2020 (2020-02-21)<br>entire document | 1-47 |
| A | CN 102595475 A (ZTE CORP.) 18 July 2012 (2012-07-18)<br>entire document | 1-47 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2023** | **09 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/134236** |

**C. DOCUMENTS CONSIDERED TO BE RELEVANT**

| Category* | Citation of document, with indication, where appropriate, of the relevant passages | Relevant to claim No. |
| --- | --- | --- |
| A | CN 110557976 A (MEDIATEK INC.) 10 December 2019 (2019-12-10) entire document | 1-47 |

Form PCT/ISA/210 (second sheet) (July 2022)

<table>
<tr><td colspan="2">INTERNATIONAL SEARCH REPORT<br>Information on patent family members</td><td colspan="2">International application No.<br><br>**PCT/CN2022/134236**</td></tr>
</table>

| Patent document cited in search report | | | Publication date (day/month/year) | Patent family member(s) | | | Publication date (day/month/year) |
|---|---|---|---|---|---|---|---|
| WO | 2021208111 | A1 | 21 October 2021 | None | | | |
| WO | 2019193125 | A1 | 10 October 2019 | None | | | |
| CN | 110831034 | A | 21 February 2020 | KR | 20210030967 | A | 18 March 2021 |
| | | | | EP | 3821639 | A1 | 19 May 2021 |
| | | | | EP | 3821639 | A4 | 29 September 2021 |
| | | | | US | 2021306893 | A1 | 30 September 2021 |
| CN | 102595475 | A | 18 July 2012 | KR | 20130114168 | A | 16 October 2013 |
| | | | | JP | 2014501470 | A | 20 January 2014 |
| | | | | JP | 5714124 | B2 | 07 May 2015 |
| | | | | EP | 2629566 | A1 | 21 August 2013 |
| | | | | EP | 2629566 | A4 | 28 September 2016 |
| | | | | EP | 2629566 | B1 | 15 August 2018 |
| | | | | WO | 2012092792 | A1 | 12 July 2012 |
| | | | | BR | 112013016800 | A2 | 18 October 2016 |
| | | | | BR | 112013016800 | B1 | 04 January 2022 |
| | | | | US | 2013242796 | A1 | 19 September 2013 |
| CN | 110557976 | A | 10 December 2019 | WO | 2019185044 | A1 | 03 October 2019 |
| | | | | TW | 201943291 | A | 01 November 2019 |
| | | | | TWI | 754138 | B | 01 February 2022 |
| | | | | US | 2019306734 | A1 | 03 October 2019 |
| | | | | US | 10932147 | B2 | 23 February 2021 |

Form PCT/ISA/210 (patent family annex) (July 2022)